# EUROPÄISCHE PATENTSCHRIFT

(11) **EP 1 647 487 B1**
(45) Veröffentlichungstag und Bekanntmachung des Hinweises auf die Patenterteilung: **27.06.2007**
(21) Anmeldenummer: 05021758.7
(22) Anmeldetag: 06.10.2005
(51) Int. Cl.: B65B 35/56, B65B 5/10, B65B 9/04

(54) **Verfahren und Vorrichtung zum Einlegen von Tabletten in die Höfe tiefgezogener Bodenfolie**
Method and apparatus for placing pills in pockets formed in sheets
Procédé et dispositif pour placer des comprimés dans les alvéoles formés dans une feuille

(30) Priorität: 12.10.2004 DE 102004049560
(43) Veröffentlichungstag der Anmeldung: 19.04.2006
(73) Patentinhaber: MediSeal GmbH, 33758 Schloss Holte-Stukenbrock (DE)
(72) Erfinder: Kaplan, Horst, 33813 Oerlinghausen (DE); Barke, Heinrich, 32791 Lage (DE)
(74) Vertreter: Rehberg Hüppe + Partner

(56) Entgegenhaltungen:
- CH-A- 291 072
- DE-A1- 2 239 344
- DE-A1- 10 026 331
- US-A- 2 983 374
- US-A- 4 627 225
- US-A1- 2001 017 025

## Beschreibung

Die Erfindung betrifft ein Verfahren zum Einlegen von Tabletten in die Höfe tiefgezogener Bodenfolie, indem die aus einer Tablettenpresse oder einem Vorrat flachliegend auslaufenden Tabletten aufgestaut und zu Tablettensträngen geordnet werden, worauf die Tabletten der Tablettenstränge einzeln in je einen Hof in der Bodenfolie abgelegt werden, wobei Stücke und Staub beschädigter Tabletten entfernt werden. Die Erfindung zeigt und beschreibt auch eine Vorrichtung zum Einlegen von aus einer Tablettenpresse oder einem Vorrat flachliegend auslaufenden Tabletten in die Höfe tiefgezogener Bodenfolie, mit einem Staubildner, einem Strangbildner und einer Überführeinheit zum vereinzelten Ablegen der Tabletten in je einen Hof in der Bodenfolie, wobei Stücke und Staub beschädigter Tabletten entfernt werden. Bei den von der Erfindung angesprochenen Tabletten handelt es sich um scheibenförmige Körper, die im Wesentlichen einen zylindermantelförmig verlaufenden Rand und zwei Kreisflächen aufweisen, die eben oder auch konkav oder konvex geformt verlaufen können. Die Tabletten können aus dem Gebiet der Pharmazie, aber auch aus dem Gebiet der Bonbonherstellung stammen. In allen Fällen handelt es sich um scheibenförmige Körper mit einem Verhältnis von Durchmesser zu Dicke etwa im Bereich von 3:1. Damit werden insbesondere relativ dünne Tabletten angesprochen, die zudem nicht sehr verdichtet gepresst sind, so dass sie während der Behandlung bis zur Verpackung einer erheblichen Bruchgefahr unterliegen. Solche Tabletten sind beispielsweise als Brausetabletten bekannt, bei denen zwischen der Tablettenpresse und der Verpackung nicht nur die Bruchgefahr in Form von Stücken auftritt, sondern durch Reibung und Handhabung auch eine relativ große Menge an Staub entsteht, der ähnlich oder zusätzlich zu den Stücken zu einer Verstopfungsgefahr und damit zu Betriebsunterbrechungen verbunden mit Reinigungsvorgängen führen kann.

Ein Verfahren und eine Vorrichtung zu Einlegen in die Höfe einer Bodenfolie sind aus der US 6,311,462 B2 und der US 2001/017025 A1 bekannt. Die Tabletten werden in einer Tablettenpresse in schneller Folge gepresst und gelangen in großen Stückzahlen auf eine abwärts geneigte Rutsche. Anschließend werden die Tabletten flachliegend in chaotischer Anordnung von einem Förderband aufgenommen, über dem besonders gestaltete Seitenwände angeordnet sind, um die Tabletten aufzustauen. Das Aufstauen dient gleichzeitig der Verteilung der Tabletten quer zur Arbeitsrichtung vor einem Strangbildner, in dem die Tabletten zu Tablettensträngen angeordnet werden, so dass die Tabletten jeweils hintereinander in einem Strang formiert werden, und sich zwei benachbarte flachliegende Tabletten jeweils nur an einer Stelle randseitig berühren. Zu diesem Zweck weist der Strangbildner Kanäle auf, in denen die Tablettenstränge aufgestaut werden. Der Auslauf des Strangbildners ist mit einer Anschlagleiste verschlossen, so dass das Aufstauen der Tabletten im Strangbildner erfolgt. Es ist eine Überführeinheit vorgesehen, die mit Saugern bestückt ist. Die Überführeinheit wird über die Tablettenstränge im Strangbildner abgesenkt, so dass die vordersten Tabletten, die von der Anschlagleiste zurückgehalten werden, durch Saugen flachliegend aufgenommen und in Richtung auf die Bodenfolie bewegt und einzeln in je einen Hof in der Bodenfolie abgelegt werden. Die Sauger der Überführeinheit ergreifen dabei auch beschädigte Tabletten, wenn diese noch relativ groß sind. Kleinere Tablettenstücke können dagegen nicht aufgenommen werden, so dass letztendlich neben unbeschädigten Tabletten auch beschädigte Tabletten in die Höfe in der Bodenfolie eingelegt werden, als auch Fehlstellen in der Verpackung entstehen, in denen sich keinerlei Tabletten befinden. Die Anschlagleiste ist anhebbar gestaltet, so dass sich im Strangbildner ablagernder Staub und kleine abgebrochene Tablettenstücke ausgeschleust werden können. Sobald neue Tabletten im Strangbildner nachgerückt sind, muss die Anschlagleiste wieder in ihre Wirkstellung verbracht werden. Es ist vorgesehen, die Anschlagleiste auch manuell öffnen zu können, um auf diese Weise Tablettenstücke und unbeschädigte Tabletten für einen steuerbaren Zeitraum gemeinsam als Abfall auszuschleusen und damit Bereiche des Strangbildners zu reinigen. Es versteht sich, dass die einzelnen Stationen in ihrer Arbeitsgeschwindigkeit so aufeinander abgestimmt werden müssen, dass möglichst keine Fehlstellen entstehen. Die Tabletten werden liegend gefördert, d. h. sie verlassen ihre liegende Position auf ihrem Weg von der Tablettenpresse bis in die Höfe der Bodenfolie zu keinem Zeitpunkt.

Nachteilig an dem bekannten Verfahren und der Vorrichtung ist es, dass die Beanspruchung der Tabletten zwischen der Tablettenpresse und ihrer Überführung in die Höfe der Bodenfolie relativ hoch ist, so dass auch der Bruch- und Staubanteil insbesondere bei wenig fest gepressten Tabletten entsprechend hoch ist. Durch Bruch und Staub ergeben sich Betriebsstörungen einerseits, die wieder behoben werden müssen, und andererseits Fehlpackungen mit Höfen, die angebrochene Tabletten und/oder Fehlstellen enthalten. Diese Arbeitsweise lässt sich nicht vermeiden, obwohl an verschiedenen Stellen Absaugeinrichtungen vorgesehen sind, um Tablettenstaub und kleinere abgebrochene Tablettenstücke abzusaugen.

Aus der DE 866 476 C und der CH 291 072 A ist ein Verfahren und eine Vorrichtung zum Einlegen von Gegenständen, beispielsweise Tabletten, in Vertiefungen bekannt. Die Tabletten treten aus einem Trichter, in welchem sie sich in chaotischer Lage befinden, zunächst durch einen zwischen zwei gegenläufig angetriebenen Walzen gebildeten Spalt, wobei sie sich mit ihren Achsen horizontal ausgerichtet aufrichten. Sie gelangen dann in eine Stau- und Abgabestation, mit deren Hilfe sie niedergeführt und unmittelbar in die Vertiefungen der Bodenfolie abgelegt werden. Die Stau- und Abgabestation weist abwärts geführte Kanäle auf, die schräg geneigt oberhalb der Vertiefungen enden, so dass die Tabletten am unteren Ende der Stau- und Abgabestation aus den dort endenden Kanälen unmittelbar in die Vertiefungen fallen. Eine zusätzliche Überführeinheit ist nicht vorgesehen. Beschädigte Tabletten werden ebenso wie unbeschädigte Tabletten in den Vertiefungen abgelegt. Aus der DE 100 26 331 A1 ist eine Vorrichtung zum Zuführen von Tabletten in die Höfe einer Bodenfolie bekannt, bei der die Tabletten in chaotischer Anordnung aus einem Trichter austreten. Die Tabletten sollen lückenlos in Aufnahmen eines Transportbandes gelangen, mit dem sie in geneigter Relativlage niedergeführt und durch Umlenkung des Transportbandes in eine horizontale Förderstrecke gebracht in die Höfe abgelegt werden. Die Tabletten unterliegen auf ihrem Förderweg einer erheblichen Beanspruchung, insbesondere einer Scher- und Reibungsbeanspruchung. Dem Transportband kann ein Sortierband oder eine Linearförderrinne vorgeschaltet sein. Beschädigte Tabletten werden nicht ausgeschleust, sodass beschädigte und unbeschädigte Tabletten in die Höfe abgelegt werden, andererseits ab er auch Fehlstellen, also unbesetzte Höfe, entstehen.

### AUFGABE DER ERFINDUNG

Der Erfindung liegt die Aufgabe zugrunde, ein Verfahren und eine Vorrichtung zum Einlegen von Tabletten in die Höfe tiefgezogener Bodenfolie aufzuzeigen, bei der die Tabletten vor dem Einlegen in die Höfe der Bodenfolie auf Beschädigungen überprüft und auf ihrem gesamten Förderweg vergleichsweise schonender behandelt werden, so dass die Bruchgefahr reduziert ist. Es sollen nur nicht-beschädigte Tabletten in die Höfe der Bodenfolie mit erhöhter Betriebssicherheit eingelegt werden.

### LÖSUNG

Die Aufgabe der Erfindung wird erfindungsgemäß mit den Merkmalen der unabhängigen Patentansprüche 1 und 5 gelöst.

### BESCHREIBUNG DER ERFINDUNG

Die Erfindung geht von dem Gedanken aus, die flachliegend ankommenden Tabletten in eine gedrehte Stellung aufzurichten, um sie in der aufgerichteten Stellung handhaben zu können. Diese gedrehte Stellung wird über weite Bereiche des Verfahrens aufrechterhalten. Erst im letzten Moment vor dem flachliegenden Ablegen der Tabletten in die Höfe der tiefgezogenen Bodenfolie erfolgt die Rückdrehung in die flachliegende Stellung. Unter der flachliegenden Stellung wird eine Stellung verstanden, bei der die Achse einer Tablette senkrecht oder zumindest etwa senkrecht angeordnet ist, wie dies beispielsweise auf einer geneigt verlaufenden Rutsche der Fall ist. Unter einer gedrehten Stellung wird eine Stellung verstanden, in der die Achse der Tablette waagerecht oder zumindest etwa waagerecht mit kleinem Neigungswinkel verläuft. Im einen Fall wird die Tablette mit waagerecht ausgerichteter Achse auf ihrem Rand aufgestellt. Im anderen Fall, also bei leicht geneigter Stellung, ergeben sich an der Tablette Kräfte, die teilweise am Rand, teilweise an einer der beiden Stirnflächen angreifen. Im letzteren Fall wird eine Kräfteaufteilung und damit auch eine Aufteilung der Beanspruchung der Tablette während ihrer Handhabung erreicht, wodurch die Bruchgefahr reduziert wird. Da die Tabletten einen kreisbogenförmig verlaufenden Rand besitzen, ergibt sich die Möglichkeit, die Tabletten in der aufgerichteten Stellung auf dem Rand rollend weiterzubewegen, wobei also die bei flachliegender Behandlung auftretende Gleitreibung durch eine Rollreibung ersetzt wird, die die Tablette vergleichsweise weniger beansprucht. Zur Aufnahme von Kräften erscheint der Rand einer Tablette besser geeignet als die beiden Stirnflächen der Tablette. Durch die Behandlung der Tabletten in der gedrehten Stellung ist die Bruchgefahr wesentlich reduziert. Diese Erkenntnis überrascht, weil ja Tabletten in einer Tablettenpresse senkrecht zu ihrer Haupterstreckungsebene gepresst werden.

Wenn die Tabletten aus der flachliegenden Stellung um etwa 90° in die gedrehte Stellung aufgerichtet werden, stehen sie auf ihrem Rand auf, so dass die Rollreibung während ihres Transportes voll genutzt werden kann und allenfalls geringfügige Gleitreibungskräfte auf die Stirnseiten der Tabletten einwirken, die von Führungselementen, Leitstegen oder dergleichen herrühren. Es ist aber auch möglich, die Tabletten aus der flachliegenden Stellung um beispielsweise etwa 45° bis 60° in die gedrehte Stellung zu drehen und so eine Kraftaufteilung herbeizuführen. All diese gedrehten Stellungen sind bestens geeignet, die Tabletten schonend zu behandeln. Insbesondere besteht die Möglichkeit, die Tabletten in ihrer gedrehten Stellung in sehr einfacher Weise zu vereinzeln, um sie dann einzeln auf Beschädigungen überprüfen zu können.

So werden die aufgerichteten Tabletten der Tablettenstränge vereinzelt und in der vereinzelten Stellung auf Beschädigungen überprüft. Beschädigte Tabletten werden einzeln ausgeschleust, so dass dem weiteren Verfahren nur unbeschädigte Tabletten zugrunde gelegt werden. Die Gefahr, dass solche unbeschädigten Tabletten bei weiteren Verfahrensschritten beschädigt werden, ist relativ gering. Zum einen schließen sich nur relativ wenige Verfahrensschritte an und die Tabletten wurden in vorausgehenden Verfahrensschritten vergleichsweise stärker belastet, so dass sie, wenn eine Bruchempfindlichkeit vorgelegen hätte, bereits vor der Überprüfung gebrochen sein müssten.

Die unbeschädigten überprüften Tabletten der Tablettenstränge werden aus der vereinzelten Stellung heraus wiederum mit Überschuss aufgestaut, d. h. an der Staustelle liegt eine größere Anzahl von Tablettensträngen vor, als einer Reihe von Höfen gemäß dem Rastermaß der Bodenfolie entsprechen. Bei diesem Aufstauen können die Tablettenstränge auch gespreizt werden, d. h. der gegenseitige Abstand der Tablettenstränge kann entsprechend dem Rastermaß der Höfe festgelegt werden. Die Tabletten werden vereinzelt in gedrehter Stellung in Vertiefungen einer plattenförmigen Überführeinheit abgestellt, wobei sie randseitig auf einem Boden stehend aufruhen. Das Zurückdrehen der Tabletten in die flachliegende Stellung erfolgt erst während ihres Durchtrittes durch die Überführungseinheit und damit unmittelbar vor dem Ablegen in die Höfe. Umgekehrt erfolgt das Aufrichten der Tabletten aus der flachliegenden in die gedrehte Stellung möglichst frühzeitig im Verfahren, also unmittelbar nach dem Auslaufen der Tabletten aus einer Tablettenpresse oder aus einem Vorrat. Die wesentlichen Verfahrensschritte erfolgen in der aufgerichteten Stellung der Tabletten.

Die Vorrichtung zum Einlegen von aus einer Tablettenpresse oder einem Vorrat flachliegend auslaufender Tabletten in Höfe tiefgezogener Bodenfolie erfolgt mit einem Staubildner, einem Strangbildner und einer Überführeinheit zum vereinzelten Ablegen der Tabletten in je einen Hof in der Bodenfolie. Stücke und Staub beschädigter Tabletten werden an den verschiedenen Stellen der Vorrichtung entfernt, insbesondere abgesaugt, wo dies sinnvoll und erforderlich ist.

Wesentliches Element der Vorrichtung ist eine Aufrichtstation, mit der die Tabletten aus der flachliegenden Stellung in eine gedrehte Stellung aufgerichtet werden, in der sie zumindest teilweise, vorzugsweise aber gänzlich auf ihrem Rand aufstehen. In der Bearbeitungsfolge schließen sich dann weitere Stationen zur Behandlung der Tabletten in der gedrehten aufgerichteten Stellung an. Schließlich ist eine Überführeinheit vorgesehen, die dazu dient, die Tabletten in die flachliegende Stellung zurückzudrehen. Diese Überführeinheit weist geneigt oder bogenförmig verlaufende Kanäle auf, durch die die Tabletten rutschen und dabei zurückgedreht, also in die flachliegende Stellung zurückgeführt werden.

Die Aufrichtstation kann eine Vielzahl sich im Wesentlichen vertikal erstreckende und in vertikaler Richtung beweglich angetriebene Lamellen aufweisen, zwischen denen der Dicke der Tabletten entsprechende Spalte gebildet sind. Die Spalte sind bodenseitig geschlossen ausgebildet, was durch eingestellte Bleche, aber auch durch einen über die Arbeitsbreite durchgehenden Boden realisiert werden kann. Die Aufrichtstation weist der Dicke und dem Durchmesser der Tabletten entsprechende Durchlässe auf, wobei die Dimensionen so gewählt sind, dass jeweils eine Tablette durch einen Durchlass hindurchrollen kann, jedoch verhindert wird, dass mehrere Tabletten gleichzeitig hindurch treten oder sich verkeilen können. Die Lamellen sind mit ihren Arbeitsebenen schräg angeordnet, so dass die aufgestauten Tabletten in die aufgerichtete Stellung überführt, also gedreht werden. Die Lamellen können in Form von zwei Lamellenpaketen vorgesehen sein, wobei das eine Lamellenpaket ortsfest und das andere Lamellenpaket dazu relativbeweglich angeordnet sein kann. Auf diese Weise werden immer wieder geneigte Flächen geschaffen, an denen die Tabletten zwischen Lamellen in Spalte einrutschen können, wobei sie gedreht und dabei aufgerichtet werden. Es ist aber auch möglich, beide Lamellenpakete relativ zueinander zu bewegen oder auf die Ausbildung von gleichförmig bewegten Lamellen zu verzichten und stattdessen die Lamellen in einer Folge quer über die Arbeitsbreite zu bewegen. Die Lamellen können in einer gemeinsamen Achse schwenkbar aufgehängt sein. Für die Bewegung der Lamellen mit einer vertikalen Bewegungskomponente gibt es wieder eine ganze Reihe von Möglichkeiten. Hier lässt sich ein Kurbeltrieb oder ein Nockentrieb sinnvoll einsetzen. Die Aufrichtstation kann auch mit einem Vibrationsantrieb versehen sein, der die Auf- und Abbewegung der Lamellen überlagert. Die Aufrichtstation kann gleichzeitig als Aufstaustation ausgebildet sein. Sie ist in der Regel unmittelbar nach dem Auslauf einer Tablettenpresse angeordnet, damit die wesentliche Behandlung der Tabletten in aufgerichtetem Zustand nachfolgen kann.

Bei einer besonders sinnvollen Ausführungsform weist die Überführeinheit zwei aufeinander liegende, sich im Wesentlichen horizontal erstreckende Platten auf, die einerseits gemeinsam gesteuert bewegbar sind, insbesondere um sie aus einer Beladestellung in eine Ablegestellung oberhalb der Bodenfolie zu versetzen. Andererseits sind die beiden aufeinander liegenden Platten gesteuert relativ zueinander verschiebbar. Die obere Platte weist vertikal durchgehende Vertiefungen zum Abstellen der Tabletten auf. Die Vertiefungen besitzen vorzugsweise rechteckigen Querschnitt entsprechend dem Durchmesser und der Dicke einer Tablette, wobei freilich immer das erforderliche Spiel für die Bewegung der Tablette vorgesehen ist. Die beiden Platten können so gegeneinander positioniert werden, dass die untere Platte die durchgehenden Vertiefungen in der oberen Platte nach unten abschließt. In dieser Stellung erfolgt das Aufstellen der Tabletten in die Vertiefung hinein. Die Vertiefungen sind vorzugsweise bereits im Rastermaß der Höfe der Bodenfolie angeordnet, so dass ein Spreizen der Tabletten während der Überführung nicht mehr erforderlich ist. Die untere Platte weist geneigt oder bogenförmig verlaufende Kanäle auf, durch die die Tabletten mit Spiel durchrutschen können, wobei sie aus der aufgerichteten Stellung in die flachliegende Stellung zurückgedreht werden. Diese Kanäle können durch Relativbewegung der ersten und der zweiten Platte gegeneinander so verschoben werden, dass die Kanäle unmittelbar an die Vertiefungen der oberen Platte anschließen. Wenn diese Anschlussstellung herbeigeführt wird, rutschen die Tabletten unter der schon beschriebenen Zurückdrehbewegung in die Höfe der Bodenfolie. Die plattenförmige Konstruktion der Überführeinheit ermöglicht es, die Tabletten unmittelbar oberhalb der Bodenfolie abzugeben, also mit sehr geringer Fallhöhe, so dass auch bei diesem letzten Behandlungsschritt kaum eine Bruchgefahr besteht. Die Überführeinheit wird als Formatteil ausgebildet und ist damit leicht austauschbar, wenn ein anderes Rastermaß und/oder Tabletten mit anderen Abmessungen verpackt werden sollen.

Es ist zweckmäßig, wenn zwischen der Aufrichtstation und der Überführeinheit eine Stau-und Abgabestation zum Aufstauen der Tablettenstränge mit einer Überzahl an Tabletten und zum vereinzelten Abgeben der dem Rastermaß entsprechenden Anzahl an Tabletten in die Vertiefung der Überführeinheit vorgesehen ist. Damit ist die Möglichkeit für eine steuerungsmäßige Abstimmung der Stationen der Vorrichtung zueinander möglich. Dies gilt insbesondere dann, wenn die Tabletten auf Unversehrtheit überprüft und beschädigte Tabletten ausgeschleust werden. Die Anwendung einer Überzahl an Tabletten in der Stau- und Abgabestation sorgt dafür, dass sämtliche Vertiefungen der Überführeinheit jeweils gefüllt werden können und so Fehlstellen in den Verpackungen vermieden werden.

Weiter kann eine Kontrollstation zum Überprüfen der vereinzelten Tabletten auf Beschädigungen und zum Ausschleusen beschädigter Tabletten vorgesehen sein. Eine solche Kontrollstation arbeitet zweckmäßig mit Kameras, die insbesondere den Rand der Tabletten in Draufsicht überprüft. Die Tabletten können in dieser Kontrollstation leicht schräg liegend gefördert werden, wobei sie hier vereinzelt auf Abstand in Ruhe liegen, so dass eine taktweise Überprüfung jeder einzelnen Tablette möglich ist. Durch die geneigte Schräglage der Tabletten an dieser Stelle ist es möglich, eine Vielzahl von Kameras und Auswerfereinheiten auf gedrängtem Raum unterzubringen und anzuwenden.

Die Aufrichtstation kann eine Einrichtung zum Absaugen von Staub und Stücken von Tabletten zwischen den Lamellen aufweisen. Auch Durchtrittsspalte für Stücke und Staub sind sinnvoll. Beim Ausschleusen beschädigter Tabletten werden auch Staub und Stücke abgeführt, beispielsweise abgesaugt oder abgeblasen, so dass nur unversehrte Tabletten der Stau- und Abgabestation zugeführt werden. Auch die Überführeinheit kann eine Einrichtung zum Absaugen von Staub und Stücken der Tabletten aus den Vertiefungen und den Kanälen aufweisen, so dass eine kontinuierliche Reinigung der Überführeinheit eintritt.

Die Vorrichtung besteht aus einer Reihe von hintereinander geschalteten Stationen. Unmittelbar nach der Tablettenpresse werden die Tabletten flachliegend über eine Rutsche oder schiefe Ebene geführt. Diese schiefe Ebene kann mit Durchbrechungen versehen sein, so dass Stücke von Tabletten, deren Abmessungen in jeder Richtung kleiner als der Durchmesser sind, durch die Rutsche hindurch fallen. Große Tabletten mit einer geringfügigen Randbeschädigung verbleiben daher im Tablettenstrom. Dieser ungeordnete flachliegende Strom von Tabletten läuft dann in die Aufrichtstation ein, wobei sich die Lamellen nicht nur in Förderrichtung, insbesondere schräg abwärts erstrecken, sondern auch noch senkrecht abstehende Fortsätze aufweisen, die eine Art Wehr bilden und damit für einen Aufstaueffekt der Tabletten sorgen. Im Übergangsbereich dieser Lamellen sind Durchlässe gebildet, die geringfügig größer als die Dicke und der Durchmesser einer Tablette ausgebildet sind. Die Tabletten werden hier in der Aufrichtstation aufgerichtet und rollend weiterbewegt, wobei sie durch die Durchlässe hindurch treten. Auch hier werden Staub und kleinere Stücke der Tabletten abgeführt. Die Tabletten gelangen dann in Form gebildeter Tablettenstränge an den Ausgang der Aufrichtstation. Sie treten in eine Kontrollstation über, wobei sie gleichzeitig vereinzelt werden. Dabei gelangen die Tabletten von Nachbartabletten frei auf entsprechenden Abstand zueinander, so dass z. B. mit Hilfe eines optischen Systems eine Überprüfung der Tabletten auf Beschädigungen leicht möglich ist. Die Kontrollstation kann ein Nockenband oder ein anderes Endlosband aufweisen, welches zur frei sichtbaren Aufnahme der einzelnen Tabletten auf Abstand geeignet ist. Mit Hilfe einer entsprechenden Steuereinrichtung können dann beschädigte Tabletten ausgeblasen und/oder abgesaugt werden, wobei diese gleichzeitig aus dem Produktstrom ausgeschleust werden. Auf diese Weise werden von der Kontrollstation nur ordnungsgemäße unbeschädigte Tabletten an eine Stau- und Abgabestation abgegeben. Auch in dieser Station werden die Tabletten in ihrer gedrehten Stellung geführt und behandelt. Die Tabletten werden mit einer größeren Zahl aufgestaut, als es dem Rastermaß der Höfe entspricht, um Fehlstellen zu vermeiden. Am Ende der Stau- und Abgabestation ist ein verschiebbarer Anschlag oder dergleichen vorgesehen, der in zwei Stellungen überführbar ist. In der einen Stellung ist die Abgabe von Tabletten verhindert. In der anderen Stellung können Tabletten kontrolliert von der Stau- und Abgabestation in die Vertiefungen der Überführeinheit abgegeben werden. Solange sich die Überführeinheit dann außerhalb des Bereiches der Stau- und Abgabestation befindet, wird eine weitere Abgabe von Tabletten verhindert. Mit der Überführeinheit wird ein ganzes Feld von aufgestellten Tabletten in einem einzigen Hub über die Höfe der Bodenfolie verbracht und entsprechend dem vorgesehenen Rastermaß werden die Tabletten in die Höfe gleichzeitig abgelegt. Dies geschieht durch eine Relativbewegung der beiden Platten der Überführeinheit relativ zueinander, wobei die Kanäle in der unteren Platte an die Vertiefungen in der oberen Platte Anschluss haben. In dieser Stellung kann der Rückhub der Überführeinheit von der Bodenfolie unter die Stau- und Abgabestation erfolgen, wobei gleichzeitig dabei eine Saugeinrichtung dafür sorgt, dass Staub und etwa in den Vertiefungen oder Kanälen verbliebene Stücke von Tabletten abgesaugt werden. Es schließt sich die weitere Verpackung in der üblichen Art und Weise an, indem eine Deckelfolie auf die mit Tabletten gefüllte Bodenfolie aufgesiegelt wird.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht der wesentlichen Elemente einer ersten Ausführungsform der Vorrichtung.
- **Fig. 2**: zeigt eine Draufsicht auf eine tiefgezogene Bodenfolie.
- **Fig. 3**: zeigt eine schematisierte perspektivische Ansicht der Elemente der Vorrichtung.
- **Fig. 4**: zeigt eine Draufsicht auf den Anfangsbereich der Vorrichtung.
- **Fig. 5**: zeigt eine schematisierte räumliche Darstellung der Aufrichtstation.
- **Fig. 6**: zeigt einen Vertikalschnitt durch die Aufrichtstation.
- **Fig. 7**: zeigt wesentliche Elemente einer Kontrollstation.
- **Fig. 8**: zeigt eine schematisierte Seitenansicht einer Stau- und Abgabestation mit einem Ausschnitt aus der Überführeinheit.
- **Fig. 9**: zeigt einen Vertikalausschnitt aus der Überführeinheit in einer um 90° gedrehten Blickrichtung.
- **Fig. 10**: zeigt die ersten vier Arbeitsschritte der Überführeinheit.
- **Fig. 11**: verdeutlicht die Relativbeweglichkeit der Platten der Überführeinheit.
- **Fig. 12**: zeigt weitere Arbeitsschritte der Überführeinheit.
- **Fig. 13**: verdeutlicht schematisch das Aufrichten der Tabletten und das Zurückdrehen derselben in die flachliegende Stellung.
- **Fig. 14**: zeigt eine weitere Ausführungsform einer Überführeinheit.

### FIGURENBESCHREIBUNG

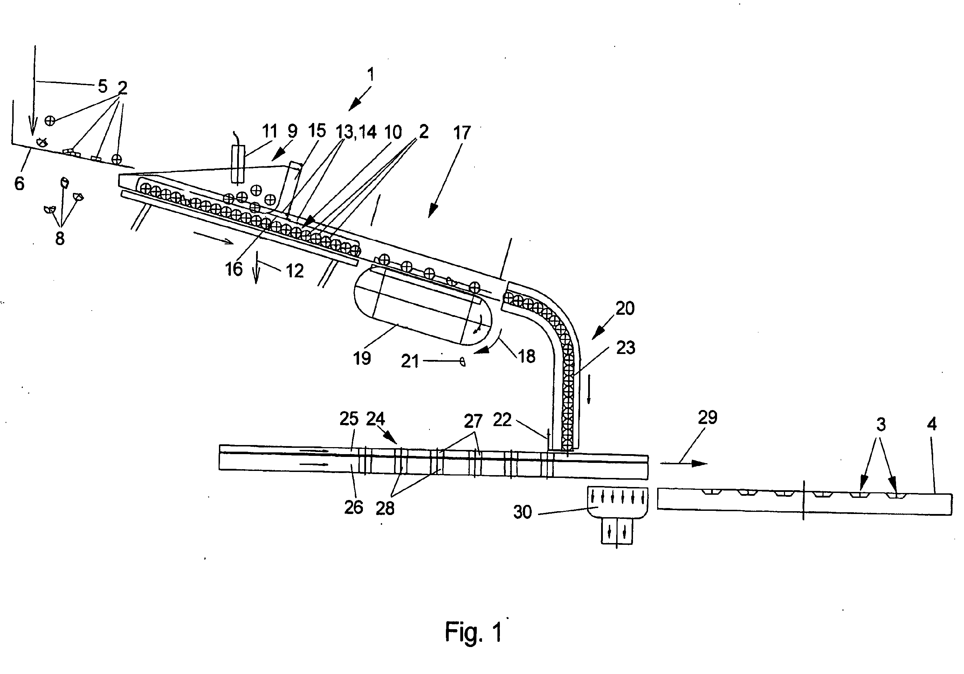

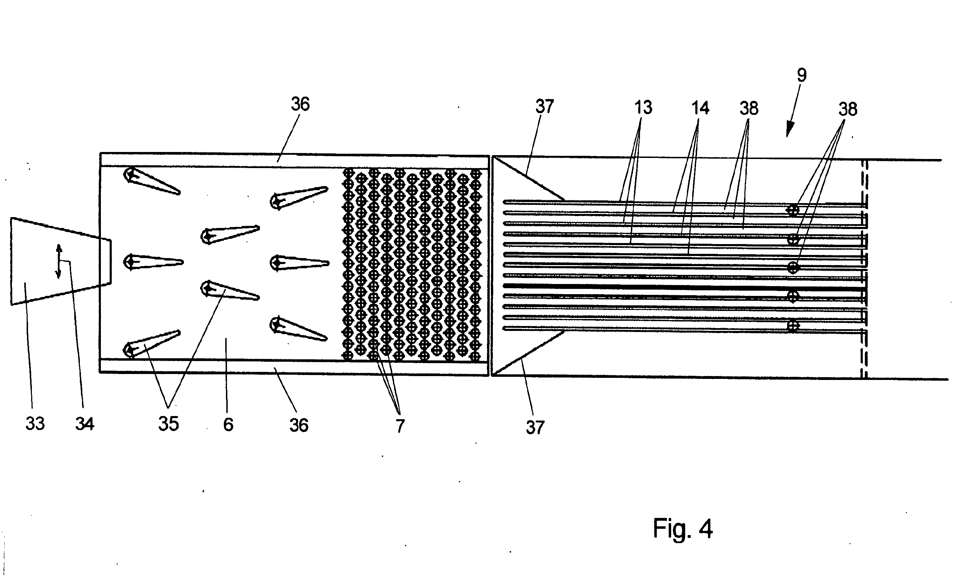

**Fig. 1** lässt schematisch die wesentlichen Elemente einer Vorrichtung 1 erkennen, mit der bruchempfindliche Tabletten 2 letztlich in Höfe 3 einer tiefgezogenen Bodenfolie 4 abgelegt werden. Die Tabletten 2 gelangen von einer nicht dargestellten Tablettenpresse oder einem Vorrat gemäß Pfeil 5 ungeordnet auf eine geneigt angeordnete Rutsche 6. Die Rutsche 6 kann auch als Schwingförderer ausgebildet sein und dazu dienen, die Tabletten 2 zeitlich gezielt abzugeben. Ein Teil des Bodens der Rutsche 6 oder die gesamte Rutsche 6 kann als Siebboden ausgebildet und mit Löchern 7 (Fig. 4) versehen sein. Der Durchmesser der Löcher 7 ist kleiner als der Durchmesser der Tabletten 2, so dass an dieser Stelle nur solche Stücke 8 von Tabletten 2 hindurch fallen, deren wirksame Abmessungen kleiner als der Durchmesser einer Tablette 2 sind. Es versteht sich, dass zusätzlich zu den Stücken 8 auch Staub aus dem Material der Tabletten durch die Löcher 7 abgeführt wird.

An den Auslauf der Rutsche 6 schließt sich eine Aufrichtstation 9 an, mit deren Hilfe die Tabletten aufgerichtet werden. Die Aufrichtstation dient also dazu, die auf der Rutsche 6 flachliegend ankommenden Tabletten zu drehen, also in eine gedrehte Stellung zu überführen, wobei die Achse des scheibenförmigen Körpers der Tablette entweder gänzlich oder zumindest teilweise horizontal ausgerichtet wird. Zur Vereinfachung sei hier angenommen, dass die Tabletten dabei vollkommen aufgestellt werden, so dass sie letztlich auf dem Rand der Tablette aufstehen und sich hintereinander zu Tablettensträngen formieren, in denen die Tabletten 2 in einem Strang aufgereiht aneinander stoßen, wie dies aus Fig. 1 erkennbar ist. Auf diese Weise werden mehrere nebeneinander und jeweils separat geführte Tablettenstränge 10 erzeugt, wobei es auf die Anzahl der Tabletten nicht ankommt. Im Bereich der Aufrichtstation 9 sind ein oder mehrere Sensoren 11 angeordnet, die den Füllungsgrad der Aufrichtstation 10 erfassen und mit deren Signalen die Herstellgeschwindigkeit der Tablettenpresse verändert werden kann. Ziel einer solchen Steuerung ist es, immer genügend Tabletten in der Aufrichtstation 9 zu haben. Es versteht sich, dass nicht alle Tabletten 2 in der Aufrichtstation unbeschädigt sind. Unter ihnen befinden sich vielmehr auch beschädigte Tabletten, die durch die Löcher 7 in der Rutsche 6 nicht abgeführt werden konnten. Es ist bereits erkennbar, dass die Tabletten 2 in der aufgerichteten Stellung im Wesentlichen rollend weiterbewegt werden, also unter sehr geringer Beanspruchung, wodurch die Bruchgefahr bruchempfindlicher Tabletten erheblich reduziert ist. Die Aufrichtstation 9 ist nach unten durchlässig ausgebildet, so dass auch hier kleinere Bruchstücke und Staub von Tabletten gemäß Pfeil 12 abgeführt werden können. Auch die Anordnung einer Saugeinrichtung unterhalb der Aufrichtstation 9 ist möglich. Die Aufrichtstation 9 weist Lamellen 13, 14 auf, die zwischen sich Spalte und Durchlässe bilden. Die Ausbildung im Einzelnen wird später erläutert werden. Die Lamellen 13 und 14 erstrecken sich im Wesentlichen geneigt abwärts und über die Länge der Aufrichtstation 9. Die Lamellen 13 und 14 besitzen senkrecht abstehende Fortsätze 15, die nach oben abragen. Die Zwischenräume zwischen den Fortsätzen 15 sind in dem abragenden Bereich verschlossen, so dass hier ein Wehr zum Aufstauen der Tabletten 2 im Förderstrom gebildet ist. An der Übergangsstelle der Fortsätze zu den Lamellen 13 und 14 sind Durchlässe 16 geschaffen, die etwas höher als der Durchmesser einer Tablette und geringfügig breiter als die Dicke der Tablette bemessen sind, so dass an dieser Stelle, an der der Durchlass an einen Spalt anschließt, nur jeweils eine Tablette hindurch treten kann. Nach den Durchlässen 16, die für jede Reihe vorgesehen sind, ordnen sich die Tabletten 2 in bzw. zu den Tablettensträngen 10.

An die Aufrichtstation 9 schließt sich im Förderstrom der Tabletten 2 eine Kontrollstation 17 an. Die Kontrollstation 17 weist ein in Richtung des Pfeils 18 angetriebenes endloses Band 19 auf, welches beispielsweise als Nockenband ausgebildet ist und Aufnahmeplätze für Tabletten 2 bereitstellt, in denen die Tabletten auf Abstand, also vereinzelt und freigestellt aufgenommen werden. Auch die Ausbildung und Wirkungsweise der Kontrollstation 17 wird später genauer beschrieben.

An die Kontrollstation 17 schließt sich eine Stau- und Abgabestation 20 an, die im Wesentlichen aus einer Mehrzahl nebeneinander befindlicher gekrümmter und nach unten geführter Kanäle besteht, in denen die Tabletten 2 wiederum zu Tablettensträngen 10, also aneinander liegend, aufgestaut werden. Die Kanäle können auch unter Spreizwirkung leicht auseinanderführend ausgebildet sein. Während die Tabletten 2 im Bereich der Kontrollstation 17 vereinzelt sind, um sie leicht auf Beschädigungen überprüfen zu können und z. B. eine beschädigte Tablette 21 auszuschleusen, werden nur ordnungsgemäße unbeschädigte Tabletten in der Stau- und Abgabestation 20 zu Tablettensträngen 10 aufgestaut. Die Stau-und Abgabestation weist endseitig einen Schieber 22 auf, der in zwei Stellungen verfahrbar ist. In der einen Stellung schließt er die Stau- und Abgabestation, so dass keine Tabletten 2 abgegeben werden. In der anderen Stellung öffnet er die Stau- und Abgabestation, so dass Tabletten 2 kontrolliert abgegeben werden können. Die Stau- und Abgabestation 20 weist mehrere voneinander getrennte und nebeneinander befindliche Bahnen 23 auf, in denen die einzelnen Tablettenstränge gebildet bzw. herabgeführt werden.

Mit dem Ende der Stau- und Abgabestation 20 arbeitet eine Überführeinheit 24 zusammen. Die Überführeinheit 24 dient der Aufnahme der Tabletten 2 in aufgerichtetem Zustand entsprechend dem Rastermaß der Höfe 3 der Bodenfolie 4 und zur Überführung der Tabletten über die Höfe 3 sowie zum Zurückdrehen der Tabletten 2 unmittelbar vor ihrer Abgabe aus der aufgerichteten Stellung in die flachliegende Stellung, die die Tabletten 2 in den Höfen 3 letztlich einnehmen müssen. Zu diesem Zweck besitzt die Überführeinheit 24 zwei aufeinander liegende, sich im Wesentlichen horizontal erstreckende Platten 25 und 26, die gemeinsam gemäß Pfeil 29 über die Bodenfolie 4 rastergenau zu den Höfen 3 überführbar sind. Die obere Platte 25 weist Vertiefungen 27 auf. Die Vertiefungen 27 besitzen rechteckigen Querschnitt entsprechend dem Durchmesser und der Dicke der Tabletten 2. Die Vertiefungen 27 erstrecken sich in vertikaler Richtung durch die obere Platte 25 hindurch. In der unteren Platte 26 sind geneigt oder bogenförmig verlaufende Kanäle 28 vorgesehen. Die Platten 25 und 26 sind nicht nur gemeinsam gemäß Pfeil 29 bewegbar, sondern auch relativ zueinander zumindest in zwei Stellungen überführbar. In der einen Stellung sind die Vertiefungen 27 der oberen Platte 25 durch die untere Platte 26 verschlossen, während in der anderen Stellung die Kanäle 28 an die Vertiefungen 27 Anschluss haben. Auch diese Ausbildung wird im Einzelnen später genauer erläutert. Der Überführstation 24 bzw. den beiden Platten 25 und 26 ist eine Einrichtung 30 zum Absaugen von Staub und kleinen Bruchstücken von Tabletten aus den Vertiefungen 27 und den anschließenden Kanälen 28 vorgesehen.

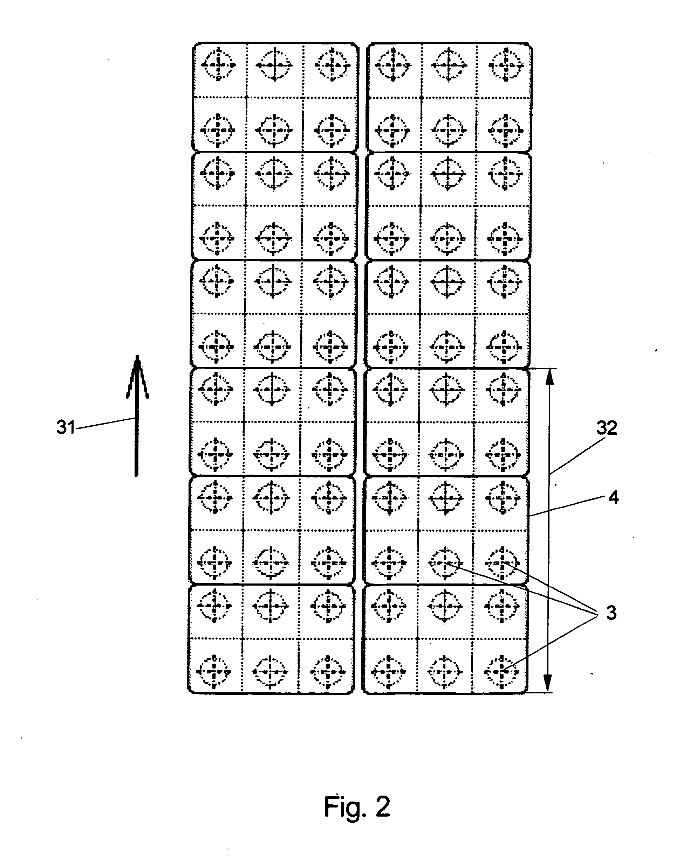

Anhand der Fig. 1 und 2 ist erkennbar, dass die Bodenfolie 4, die gemäß Pfeil 31 getaktet vorwärts bewegt wird, die Höfe 3 in dem entsprechenden Rastermaß aufweist. über die Arbeitsbreite sind hier sechs Höfe 3 in einer Reihe angeordnet, so dass auch die obere Platte 25 der Überführeinheit 24 sechs solche Vertiefungen 27 in dem entsprechenden Abstand aufweist. In dem gezeigten Ausführungsbeispiel werden mit einem Abzug 32 36 Höfe 3 bereitgestellt, die mit Tabletten 2 befüllt werden müssen. Demgemäß besitzt auch die obere Platte 25 36 Vertiefungen, die in dem dargestellten Rastermaß angeordnet sind. Es versteht sich, dass damit auch die Stau- und Abgabestation 20 sechs Bahnen 23 aufweist, die nebeneinander angeordnet sind. Weiterhin ist klar, dass auch jedes andere Rastermaß grundsätzlich bedient werden kann. Hierzu müssen einzelne Elemente und Stationen als Formatteile ausgebildet und dementsprechend ausgetauscht werden.

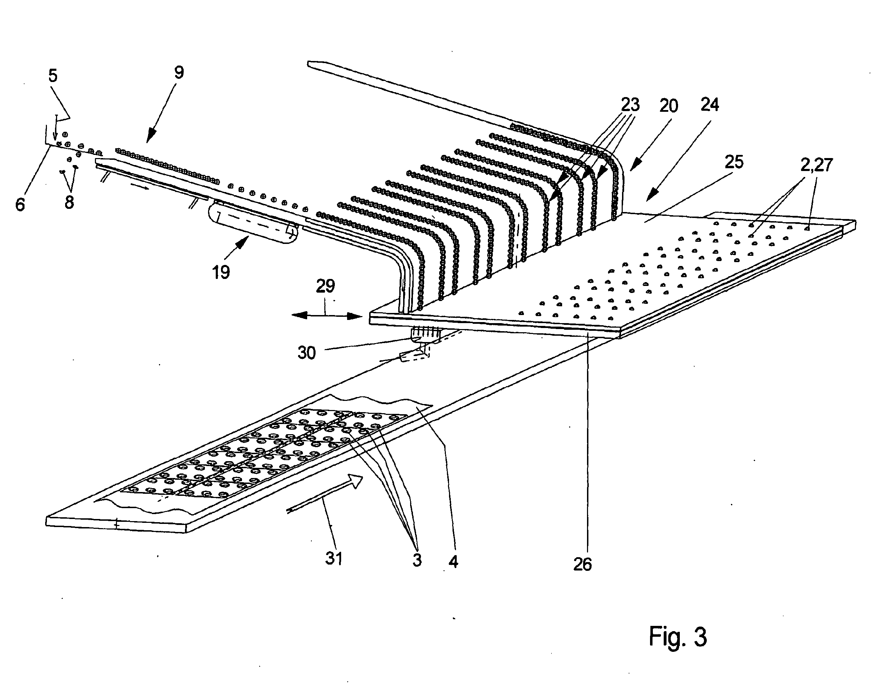

**Fig. 3** verdeutlicht noch einmal die Relativanordnung der Bahnen 23 der Stau- und Abgabestation 20 für eine Ausführungsform, bei der ein Abzug 32 nicht über sechs, sondern über zwölf Reihen geht. Demzufolge weist die obere Platte 25 72 Vertiefungen 27 auf, die stehend mit Tabletten 2 gefüllt werden. Es versteht sich, dass auch die Aufrichtstation 9 in zwölffacher Ausfertigung und die Kontrollstation 17 zwölffach nebeneinander angeordnet sind, obwohl sie der Übersichtlichkeit halber hier nur jeweils einfach angedeutet sind. Fig. 3 verdeutlicht, dass die Vorrichtung in jedem gewünschten Rastermaß erstellt bzw. angepasst werden kann.

**Fig. 4** zeigt eine Draufsicht auf die Elemente zwischen der Tablettenpresse und der Aufrichtstation 9. Die nicht dargestellte Tablettenpresse kann einen Auslass 33 aufweisen, der zur Verteilung der abzugebenden Tabletten gemäß Doppelpfeil 34 quer zur Arbeitsrichtung hin-und herbewegt wird. Im ersten Bereich der anschließenden Rutsche 6 können Flügel 35 oder ähnliche Leitelemente angeordnet werden, um dafür zu sorgen, dass sich der Strom der abgegebenen Tabletten 2 (nicht dargestellt) auf die Arbeitsbreite der Rutsche 6, die von Seitenwänden 36 begrenzt wird, mehr oder weniger gleichmäßig verteilt. Die anschließenden Löcher 7 lassen Staub und zerbrochene Stücke der Tabletten nach unten durchfallen, so dass nur beschädigungsfreie Tabletten und solche Tabletten, die nur eine relativ kleine Beschädigung besitzen, in die Aufrichtstation 9 einlaufen. Der Strom der Tabletten wird über Leitbleche 37 zusammengeführt und auf den Bereich der Lamellen 13 und 14 verteilt. Die Tabletten 2 (nicht dargestellt) befinden sich weiterhin in flachliegender ungeordneter Stellung, wobei sie auch gegeneinander angekippt und auch übereinander zu liegen kommen können. Zwischen benachbarten Lamellen 13 und 14 werden Spalte 38 gebildet, hier also zwölf Spalte gemäß der Ausführungsform der Fig. 3. Es können Sensoren 11 vorgesehen sein, um die Flügel 35 zu steuern und dafür zu sorgen, dass an allen Stellen über die Arbeitsbreite der Lamellen 13, 14 eine hinreichende Anzahl von Tabletten vorhanden ist.

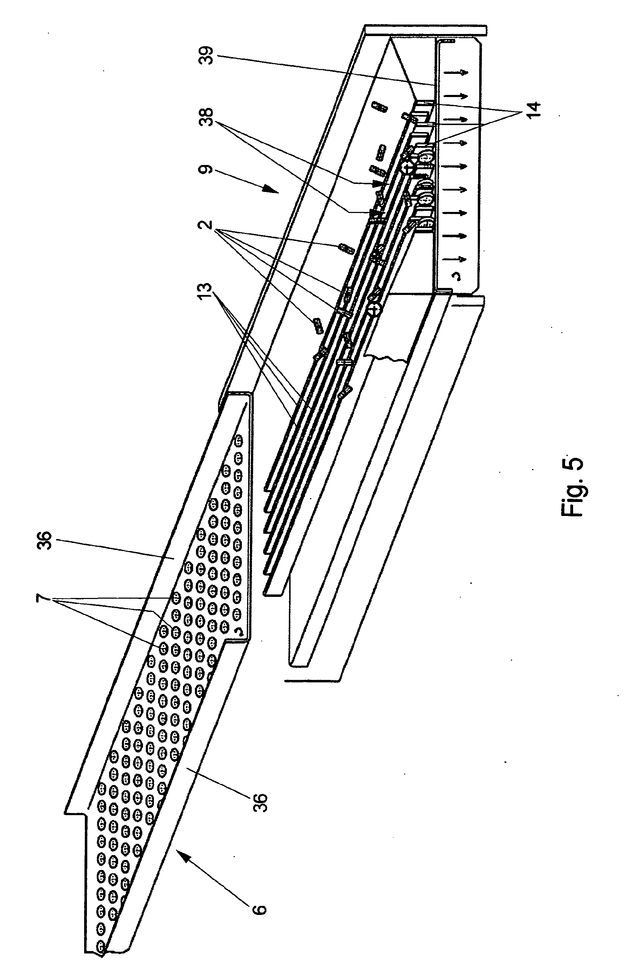

**Fig. 5** verdeutlicht noch einmal diesen in Fig. 4 bereits gezeigten Bereich, wobei aus Übersichtlichkeitsgründen die Anzahl der Lamellen 13 und 14 verändert ist. Im Bereich der Aufrichtstation 9 sind nur einige wenige Tabletten dargestellt, wobei der Strom der Tabletten im Allgemeinen größer und dichter anfällt. Es ist angedeutet, dass sich die Lamellen 14 in ihrer unteren Stellung befinden, während die Lamellen 13 gerade angehoben sind. Damit besteht für die Tabletten 2 die Gelegenheit, seitlich in die zwischen den Lamellen 13 und 14 gebildeten Spalte 38 einzurutschen und damit von der flachliegenden Stellung in die um 90° gedrehte aufgerichtete Stellung zu gelangen. Einige der aufgerichteten Tabletten 2 sind erkennbar. Unterhalb der Spalte 38 befindet sich ein durchgehender Boden 39, auf dem die Tabletten 2 mit ihren Rändern aufstehend abgelagert sind, wobei sie sich in den Spalten 38 rollend vorwärts bewegen. Es ist leicht vorstellbar, dass am Ende oder im Mittelbereich, wie in Fig. 1 angedeutet, also im Bereich der Fortsätze 15 torartige Durchlässe 16 gebildet sind, durch die nur jeweils eine Tablette rollend in einer Spur bzw. einem Spalt 38 hindurch gelangen kann, wobei sich die Tabletten 2 während und nach dem Durchtritt zu Tablettensträngen 10 formieren.

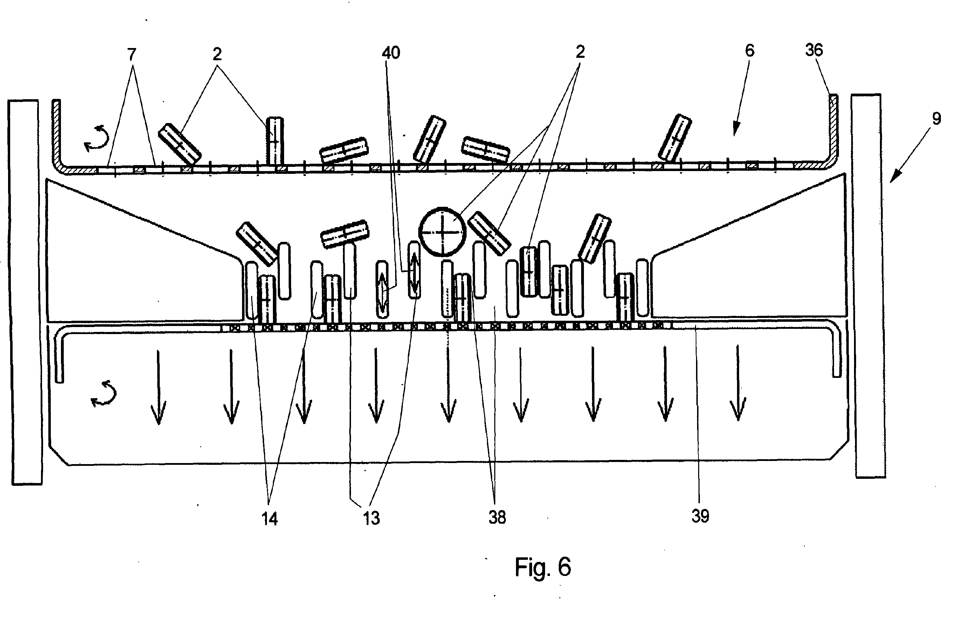

**Fig. 6** verdeutlicht noch einmal den Aufrichtvorgang der Tabletten 2 in der Aufrichtstation 9. Im oberen Bereich ist noch die Rutsche 6 mit ihren Löchern 7 dargestellt, mit deren Hilfe die Tabletten 2 in ungeordneter Relativlage herangeführt werden. In dieser Lage gelangen sie in die Aufrichtstation 9 mit den gemäß den Pfeilen 40 höhenbeweglichen Lamellen 13 und 14. Es versteht sich, dass die Lamellen 13 und 14 gegeneinander höhenbeweglich gelagert und angeordnet sein können. Es kommt nur darauf an, Auflagerpunkte für schiefe Ebenen zu bilden, an denen die Tabletten 2 in die Spalte 38 abrutschen können, wobei sie sich dabei aufrichten und wie in Fig. 6 dargestellt auf ihrem Rand aufstehen bzw. auf diesem abrollend sich vorwärts bewegen können. Es versteht sich, dass auf diese Art und Weise sämtliche Spalte 38 mit stehend ausgerichteten Tabletten 2 befüllt werden. Der Boden 39 kann als Siebboden ausgebildet sein. An ihm stützen sich die stehenden Tabletten 2 jeweils ab. Staub und kleinere Bruchstücke können durch den Boden 39 hindurch fallen und/oder abgesaugt werden. Es ist auch möglich, z. B. die Lamellen 14 ortsfest anzuordnen und nur die Lamellen 13 auf und ab zu bewegen. Die Lamellen 13 können auf einer gemeinsamen Lamellenachse schwenkbar angelenkt sein und mit Hilfe eines Kurbeltriebes oder eines Nockentriebes mit vertikaler Bewegungskomponente bewegt werden, damit das Aufrichten der Tabletten 2 erfolgt.

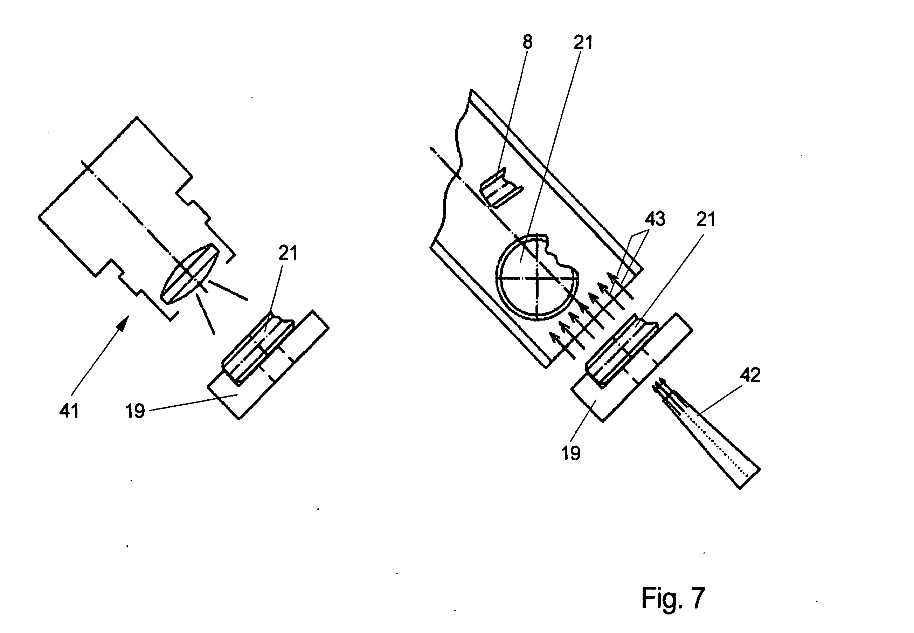

**Fig. 7** verdeutlicht die Ausbildung und Wirkungsweise der Kontrollstation 17. Wie bereits aus Fig. 1 erkennbar ist, werden die Tabletten der Tablettenstränge 10 am Übergang zwischen der Aufrichtstation 9 und der Kontrollstation 17 wiederum vereinzelt, also auf gegenseitigen Abstand gebracht. Es ist zweckmäßig, das endlose umlaufende Band 19 geneigt anzuordnen und auszubilden, damit die Tabletten 2 nicht nur mit ihrem Rand, sondern auch mit ihrer einen Stirnseite liegend aufgenommen werden können, wobei die Achse der Tablette 2 nun nicht mehr horizontal, sondern geneigt angeordnet ist. Diese Relativlage ermöglicht es, optische Systeme mit einer Vielzahl von Kameras 41 auf kleinem Raum nebeneinander anzuordnen, wie es entsprechend den nebeneinander laufenden Tablettensträngen 10 erforderlich ist. Eine im Randbereich beschädigte Tablette 21 wird von der Kamera 41 erkannt und ausgeschleust, während unbeschädigte Tabletten 2 an die Stau- und Abgabestation 20 übergeben werden. Das Ausschleusen einer beschädigten Tablette kann mit Hilfe eines Luftstroms über eine Düse 42 durch eine angedeutete Durchbrechung in dem Band 19 hindurch erfolgen. Alternativ oder zusätzlich kann auch eine Absaugeinrichtung gemäß den Pfeilen 43 zum Einsatz gelangen. Es versteht sich, dass das Ausschleusen einer beschädigten Tablette 21 von den Signalen der jeweiligen Kamera 41 gesteuert wird. Die Tabletten 2 bzw. 21 werden auf dem Band 19 geneigt liegend aufgenommen, um eine schuppenartige Überdeckung mit der Vielzahl der Kameras 41 auf kleinem Raum zu ermöglichen. Am Übergang der Tabletten in die Stau -und Abgabestation 20 kann wiederum die Drehung in die voll aufgerichtete Stellung erreicht werden.

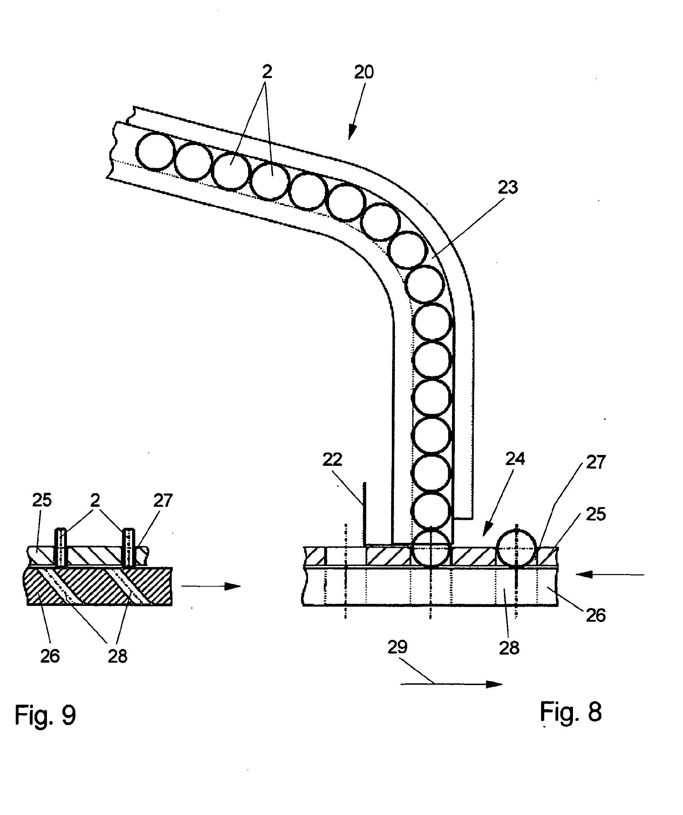

**Fig. 8** verdeutlicht die Stau- und Abgabestation 20, wobei hier nur eine Bahn 23 mit den aufgestauten Tabletten 2 angedeutet ist. Die Wandungen der Bahn 23 enden in unterschiedlicher Höhe relativ zu der Überführeinheit 24, wobei vom Grunde der Vertiefungen 27 bis zur einen Seitenwand ein Freiraum geschaffen ist, der etwas größer als der Durchmesser einer Tablette bemessen ist. Der Schieber 22 befindet sich in seiner Offenstellung. Die Vertiefungen 27 sind bodenseitig durch die untere Platte 26 abgeschlossen. Die Überführeinheit 24 wird gemäß Pfeil 29 unter der Stau- und Abgabestation 20 bewegt, wobei jeweils am unteren Ende der Stau- und Abgabestation 20 je eine Tablette in eine Vertiefung 27 eindringt und sich dort stehend ablagert. Es versteht sich, dass dies gleichzeitig bei mehreren Bahnen 23 der Stau- und Abgabestation 20 geschieht, so dass sich auf der Überführeinheit 24 sämtliche Vertiefungen 27 füllen und die Anzahl der Tabletten entsprechend dem vorgesehenen und auf einmal zu befüllenden Rastermaß der Höfe abgelagert sind.

**Fig. 9** zeigt einen Querschnitt aus einer um 90° gedrehten Blickrichtung anhand eines Ausschnittes. Man erkennt die in den Vertiefungen 27 stehenden Tabletten 2. Es ist auch erkennbar, dass die Vertiefungen 27 durch die Relativlage der Platten 25 und 26 bodenseitig verschlossen sind, so dass die Kanäle 28 noch keinen Anschluss an die Vertiefungen 27 haben. In dieser Stellung werden die Platten 25 und 26 der Überführeinheit 24 gemeinsam gemäß Pfeil 29 über die Bodenfolie 4 gebracht, wobei die Auslässe der Kanäle 28 in Relation zu den Höfen 3 gelangen. Durch eine Relativbewegung der Platten 25 und 26 bekommen die Vertiefungen 27 Anschluss an die Kanäle 28, so dass die Tabletten entsprechend dem Rastermaß gleichzeitig in die Höfe abgelegt werden, wobei die Tabletten aus der aufgerichteten Stellung in die flachliegende Stellung wieder zurückgedreht werden.

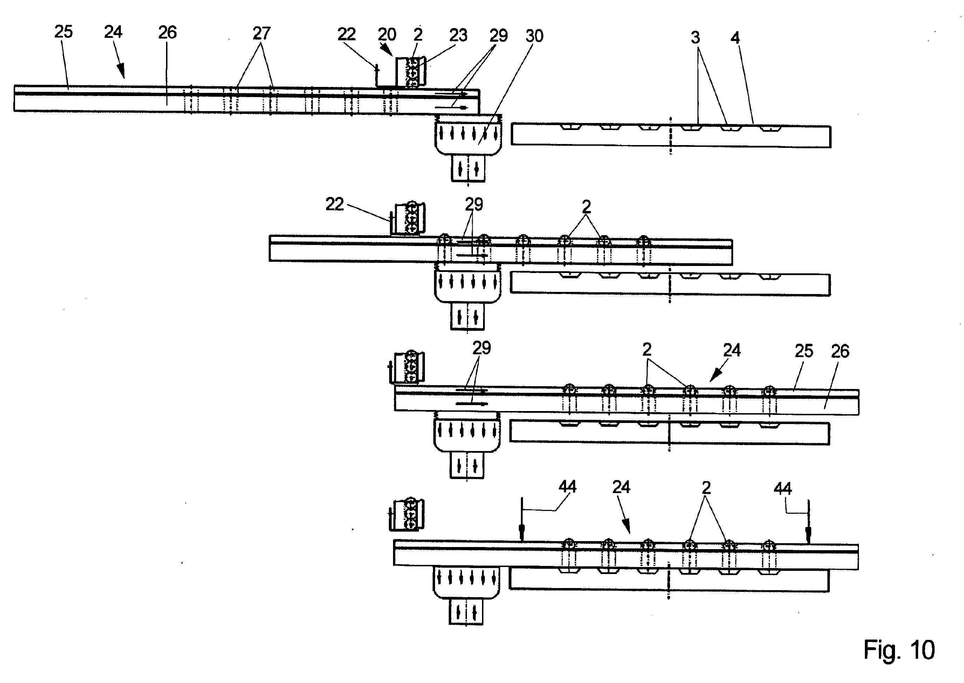

Anhand der Fig. 10 bis 12 wird die Arbeitsweise der Überführeinheit 24 in einzelnen Schritten erläutert. In der in **Fig. 10** oben dargestellten Ausgangslage befindet sich die Überführeinheit 24 unterhalb der Stau- und Abgabestation 20. Die Schieber 22 sind geöffnet. Die beiden Platten 25 und 26 befinden sich in einer solchen Relativlage zueinander, in der die Vertiefungen 27 bodenseitig geschlossen sind. Aus dieser Stellung fährt die Überführeinheit 24 unter den Auslässen der Stau- und Abgabestation 20 hindurch, wobei die Tabletten 2 sich jeweils einzeln in einer der Vertiefungen 27 nacheinander ablagern, bis das Feld der Vertiefungen 27 vollständig mit stehenden Tabletten gefüllt ist, wie dies in der zweiten Darstellung der Fig. 10 erkennbar ist. Die Schieber 22 werden in die geschlossene Stellung überführt, so dass die Tabletten 2 an einem weiteren Austreten gehindert sind.

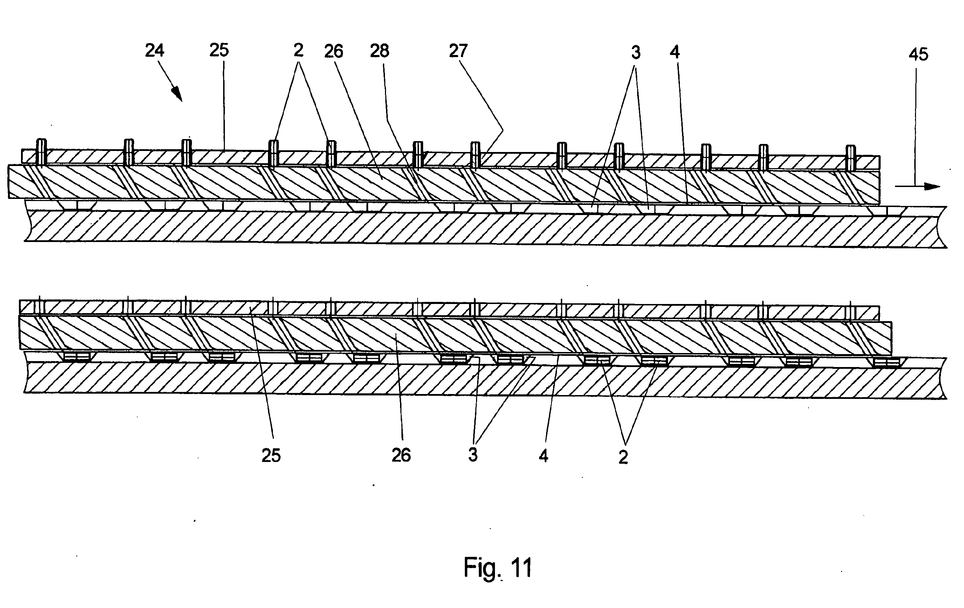

Im dritten Schritt erreicht die Überführeinheit 24 ihre rastergenaue Stellung oberhalb der Höfe 3 in der Bodenfolie 4. Im vierten Schritt wird die Überführeinheit 24 gemäß den Pfeilen 44 zwecks Verringerung der Fallhöhe abgesenkt. **Fig. 11** verdeutlicht die Relativlage der Teile in diesem Schritt noch einmal in einem Querschnitt in einer um 90° gedrehten Blickrichtung. In der oberen Darstellung der Fig. 11 sind die Vertiefungen 27 bodenseitig noch abgeschlossen, so dass sich die Tabletten 2 in der gedrehten stehenden Stellung befinden. Sodann wird beispielsweise die untere Platte 26 in Richtung des Pfeils 45 so verschoben, dass die Kanäle 28 mit den Vertiefungen 27 fluchten. Sobald dies geschehen ist, rutschen die Tabletten 2 schonend und mit geringer Fallhöhe in die Höfe 3 der Bodenfolie 4.

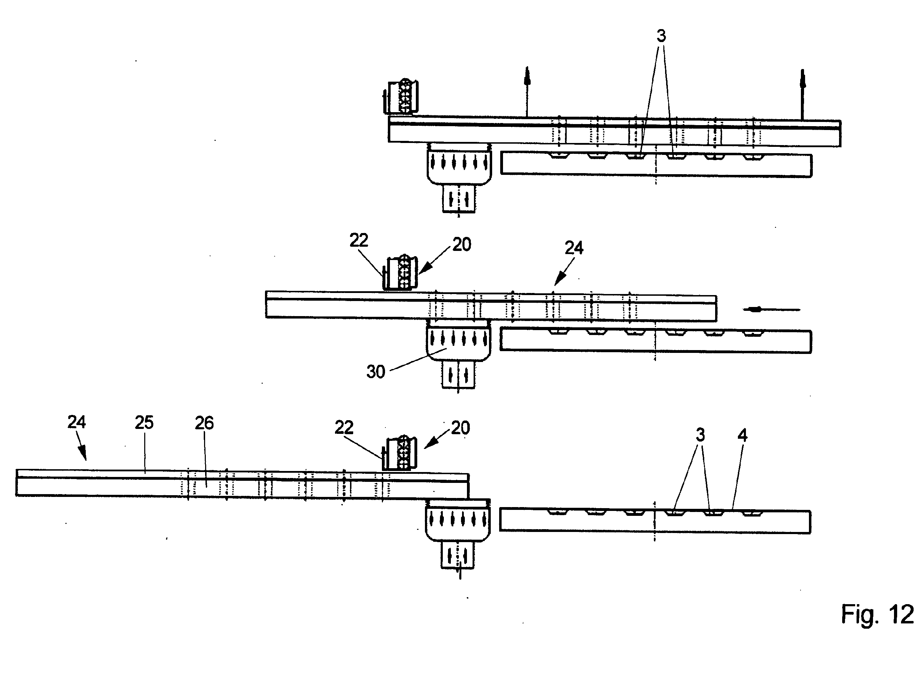

Nach dem Ablegen der Tabletten 2 in die Höfe 3 der Bodenfolie 4, wobei die Tabletten 2 gleichzeitig in die flachliegende Stellung zurückgedreht werden, wird gemäß dem in **Fig. 12** oben dargestellten weiteren Schritt zunächst die Überführeinheit angehoben. Die Absenkung gemäß den Pfeilen 44 und die Anhebung in der Gegenrichtung können einstellbar ausgebildet sein. Gleichzeitig oder leicht zeitversetzt wird die Bodenfolie 4 um einen weiteren Abzug weiterbewegt, so dass ein Rasterfeld ungefüllter Höfe 3 vorgezogen ist. Während der Rückbewegung der Überführeinheit 24 entgegen der Richtung des Pfeils 29 tritt die Einrichtung 30 in Funktion, um Staub aus den Vertiefungen 27 und den anschließenden Kanälen 28 abzusaugen und damit die Überführeinheit 24 zu reinigen. Alternativ ist es möglich, wie dargestellt, die an Unterdruck angeschlossene Einrichtung 30 ohne Unterbrechung zu betreiben. Sobald die Überführeinheit 24 ihre Ausgangslage erreicht hat, werden die Platten 25 und 26 wiederum so relativ gegeneinander bewegt, dass die Vertiefungen 27 bodenseitig abgeschlossen sind. Es schließt sich der folgende Zyklus an.

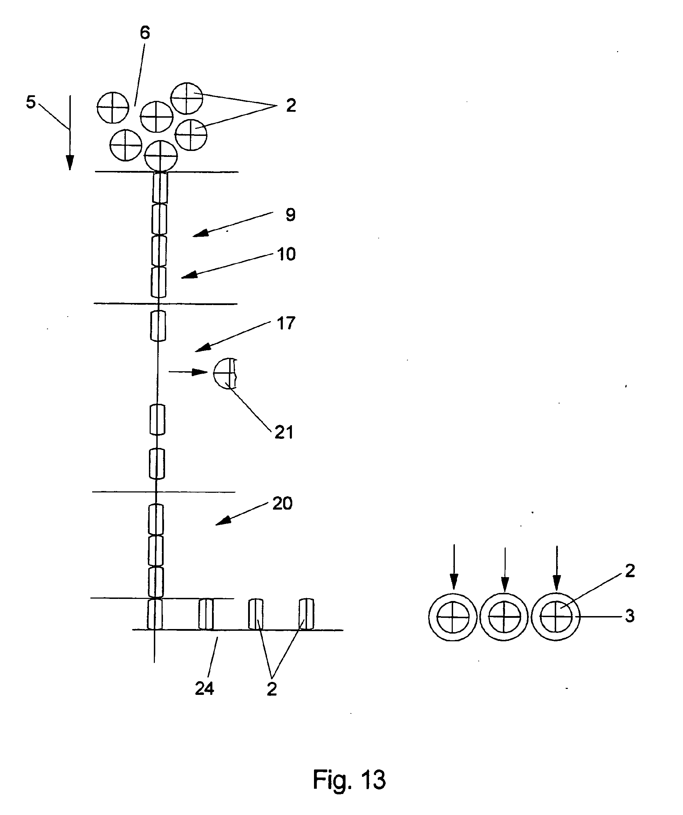

**Fig. 13** verdeutlicht noch einmal nacheinander die einzelnen Schritte, mit denen die Tabletten 2 behandelt und schließlich in die Höfe abgelegt werden. Die Tabletten 2 befinden sich zunächst in ungeordnetem flachliegendem Zustand im Bereich der Rutsche 6, den sie nach dem Austritt aus einer Tablettenpresse 5 einnehmen. Im Bereich der nachfolgenden Aufrichteinrichtung werden die Tabletten stehend aufgerichtet und zu Tablettensträngen 10 formiert. In der nachfolgenden Kontrollstation 17 befinden sich die Tabletten 2 in vereinzeltem Zustand und werden einzeln kontrolliert, wobei die Tabletten 2 entweder stehend oder schräg liegend die Kontrollstation 17 durchlaufen. Beschädigte Tabletten 21 werden ausgeschleust. In der nachfolgenden Stau- und Abgabestation 20 werden die überprüften unbeschädigten Tabletten 2 wiederum aufgestaut, wobei sie ihre aufgerichtete Lage immer noch einnehmen. Dies ist auch im Bereich der anschließenden Überführeinheit 24 der Fall. Die Tabletten 2 sind in den Vertiefungen der Überführeinheit 24 entsprechend dem vorgegebenen Rastermaß der Bodenfolie angeordnet. Schließlich erfolgt das Ablegen der Tabletten 2 in die Höfe 3 der Bodenfolie, wobei sie wieder in den flachliegenden Zustand zurückgedreht werden.

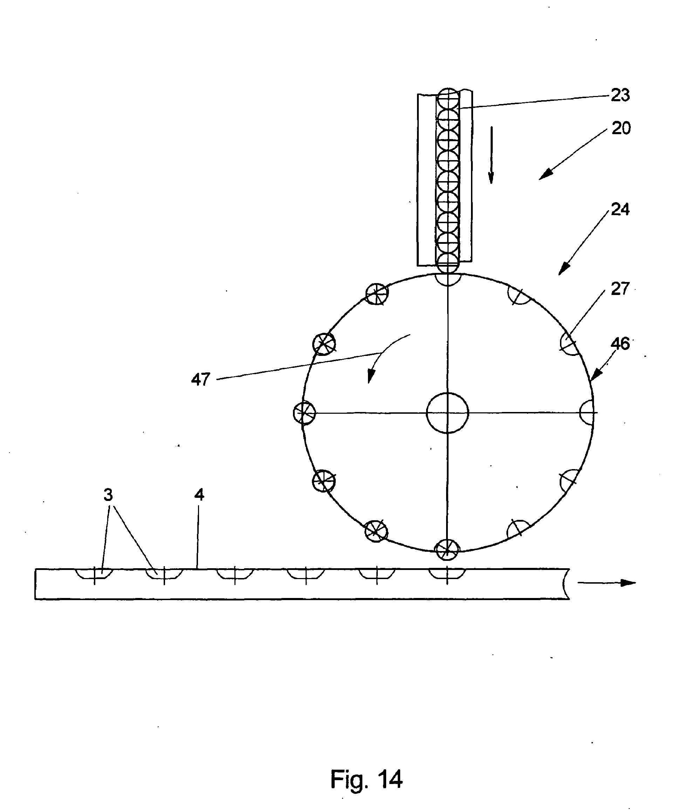

**Fig. 14** verdeutlicht eine weitere Ausführungsform der Überführeinheit 24. Die Überführeinheit 24 ist hier als Dosierwalze 46 ausgebildet, die auf ihrem Umfang die Vertiefungen 27 trägt. Die Vertiefungen 27 sind an eine Vakuumquelle angeschlossen, so dass sie beim kontinuierlichen Antrieb der Dosierwalze 46 gemäß Pfeil 47 über die Hälfte des Umfangs der Dosierwalze 46 mitgeführt und passgenau in die Höfe 3 der Bodenfolie 4 abgegeben werden. Die Abgabe kann unmittelbar oder mit Hilfe eines die Rückdrehung in die flachliegende Stellung unterstützenden Kanals (nicht dargestellt) erfolgen. Es versteht sich, dass hier die Tabletten 2 immer reihenweise abgelegt werden. Der Antrieb der Dosierwalze 46 und der Abzug der Bodenfolie 4 werden hier kontinuierlich durchgeführt.

### BEZUGSZEICHENLISTE

- 1: Vorrichtung
- 2: Tablette
- 3: Hof
- 4: Bodenfolie
- 5: Pfeil
- 6: Rutsche
- 7: Löcher
- 8: Stück
- 9: Aufrichtstation
- 10: Tablettenstrang

- 11: Sensor
- 12: Pfeil
- 13: Lamelle
- 14: Lamelle
- 15: Fortsatz
- 16: Durchlass
- 17: Kontrollstation
- 18: Pfeil
- 19: Band
- 20: Stau- und Abgabestation

- 21: beschädigte Tablette
- 22: Schieber
- 23: Bahn
- 24: Überführeinheit
- 25: Platte
- 26: Platte
- 27: Vertiefung
- 28: Kanal
- 29: Pfeil
- 30: Einrichtung

- 31: Pfeil
- 32: Abzug
- 33: Auslass
- 34: Doppelpfeil
- 35: Flügel
- 36: Seitenwand
- 37: Leitblech
- 38: Spalt
- 39: Boden
- 40: Pfeil

- 41: Kamera
- 42: Düse
- 43: Pfeil
- 44: Pfeil
- 45: Pfeil

- 46: Dosierwalze
- 47: Pfeil

## Patentansprüche

1. Verfahren zum Einlegen von Tabletten (2) in die Höfe (3) einer tiefgezogenen Bodenfolie (4) mit folgenden Verfahrensschritten:
Aufrichten der Tabletten aus der im Wesentlichen flachliegenden Stellung in eine gedrehte aufgerichtete Stellung,
Bilden von Tablettensträngen (10), Vereinzeln der aufgerichteten Tabletten (2) der Tablettenstränge (10),
Überprüfen der vereinzelten Tabletten in der gedrehten Stellung auf Beschädigungen,
Entfernen beschädigter Tabletten (2) aus der vereinzelten Stellung heraus,
Aufstauen und Niederführen unbeschädigter Tabletten (2),
Vereinzeln der niedergeführten Tabletten (2), und
Drehen der vereinzelten Tabletten (2) und Ablegen der vereinzelten Tabletten in je einen Hof (3) der Bodenfolie (4).

2. Verfahren nach Anspruch 1, **dadurch gekennzeichnet, dass** die Tabletten (2) aus der flachliegenden Stellung um etwa 90° in ihre gedrehte Stellung aufgerichtet werden, so dass sie auf ihrem Rand aufstehen.

3. Verfahren nach Anspruch 1, **dadurch gekennzeichnet, dass** die Tabletten (2) aus der flachliegenden Stellung um etwa 45° bis 60° in ihre gedrehte Stellung aufgerichtet werden.

4. Verfahren nach einem der Ansprüche 1 bis 3, **dadurch gekennzeichnet, dass** die niedergeführten Tabletten (2) nach dem Vereinzeln gruppenweise in eine Position oberhalb der Bodenfolie (4) bewegt werden und in dieser Position das Drehen und Ablegen der vereinzelten Tabletten erfolgt.

5. Verfahren nach mindestens einem der Ansprüche 1 bis 3, **dadurch gekennzeichnet, dass** die unbeschädigten überprüften Tabletten (2) der Tablettenstränge (10) mit Überschuss aufgestaut und vereinzelt in gedrehter Stellung in Vertiefungen (27) einer plattenförmigen Überführeinheit (24) abgestellt werden, und dass das Zurückdrehen der Tabletten in die flachliegende Stellung während ihres Durchtritts durch die Überführeinheit (24) erfolgt.

6. Vorrichtung zum Einlegen von Tabletten (2) in die Höfe (3) einer tiefgezogenen Bodenfolie (4),
mit einer Aufrichtstation (9), mit der die Tabletten (2) aus der flachliegenden Stellung in eine gedrehte Stellung aufgerichtet und zu Tablettensträngen (10) geordnet werden,
mit einer Kontrollstation (17) zum Vereinzeln der Tabletten (2) der Tablettenstränge (10) und zum Überprüfen der Tabletten auf Beschädigungen und Entfernen beschädigter Tabletten (21) aus der vereinzelten Stellung heraus,
mit einer Stau- und Abgabestation (20) zum Aufstauen und Niederführen unbeschädigter Tabletten, und
mit einer Überführeinheit (24) zum Abstellen wiederum vereinzelter unbeschädigter Tabletten und zum Zurückdrehen und Ablegen der Tabletten (2) in je einen Hof (3) der Bodenfolie (4).

7. Vorrichtung nach Anspruch 6, **dadurch gekennzeichnet, dass** die Aufrichtstation (9) eine Vielzahl sich im Wesentlichen vertikal erstreckender Lamellen (13, 14) aufweist, zwischen denen der Dicke der Tabletten (2) entsprechende Spalte (38) gebildet sind, dass die Spalte (38) bodenseitig geschlossen ausgebildet sind, und dass die Aufrichtstation (9) der Dicke und dem Durchmesser der Tabletten (2) entsprechende Durchlässe (16) aufweist.

8. Vorrichtung nach Anspruch 6, **dadurch gekennzeichnet, dass** die Überführeinheit (24) zwei aufeinander liegende, sich im Wesentlichen horizontal erstreckende Platten (25, 26) aufweist, die gesteuert gemeinsam bewegbar und relativ zueinander verschiebbar angeordnet sind, wobei die obere Platte (25) Vertiefungen (27) zum Abstellen der Tabletten (2) im Rastermaß der Höfe (3) der Bodenfolie (4) aufweist und die untere Platte (26) zum Zurückdrehen der Tabletten (2) in die flachliegende Stellung die geneigt oder bogenförmig verlaufenden Kanäle (28) aufweist.

9. Vorrichtung nach mindestens einem der Ansprüche 6 bis 8, **dadurch gekennzeichnet, dass** die Stau- und Abgabestation (20) zum Aufstauen der Tablettenstränge (10) mit einer Überzahl an Tabletten (2) und zum vereinzelten Abgeben der dem Rastermaß entsprechenden Anzahl an Tabletten (2) in die Vertiefungen (27) der Überführeinheit (24) vorgesehen ist.

10. Vorrichtung nach mindestens einem der Ansprüche 6 bis 9, **dadurch gekennzeichnet, dass** die Aufrichtstation (9) und/oder die Überführeinheit (24) eine Einrichtung (30) zum Absaugen von Staub und Stücken der Tabletten zwischen den Lamellen (13, 14) bzw. aus den Vertiefungen (27) und den Kanälen (28) aufweist.

## Claims

1. A method of placing tablets (2) into pockets (3) of thermoformed bottom foil (4) comprising the steps of:
erecting the tablets from their substantially flat position to reach a turned approximately upright position;
forming a plurality of lines (10) of tablets, spacing apart the erected tablets (2) without contact to each other in the lines (10);
checking the spaced apart tablets being in the upright turned position with respect to damages;
removing damaged tablets (2) in the spaced apart position;
accumulating and moving down the undamaged tablets (2);
spacing apart the moved down tablets without contact to each other; and
rotating the spaced apart tablets (2) and placing the spaced apart tablets into a pocket (3) each of the bottom foil (4).

2. The method of claim 1, **characterized in that** the tablets (2) are rotated from their substantially flat position for about 90° to reach the turned position such that they are supported on the edge of the tablet.

3. The method of claim 1, **characterized in that** the tablets are rotated from their substantially flat position by approximately 45° to 60° to reach the turned position.

4. The method of one of the claims 1 to 3, **characterized in that** the moved down tablets (2) after being spaced apart are moved in groups in a position above the bottom foil (4) and **in that** the rotating and placing of the individualized tablets takes place in this position.

5. The method of one of the claims 1 to 3, **characterized in that** the checked undamaged tablets (2) of the lines (10) are accumulated in surplus condition and are deposited in the spaced apart and turned positions to stand in impressions (27) of a platelike transfer unit (24), and **in that** the rotating back of the tablets into their flat position takes place during the passage of the tablets through the transfer unit (24).

6. An apparatus for placing tablets (2) into pockets (3) of a thermoformed bottom foil (4) comprising
an erecting station (9), the erecting station being designed and arranged to rotate the tablets (2) from a flat position in a turned position and to accumulate the tablets in lines (10),
a control station (17), the control station (17) being designed and arranged to space apart without contact the tablets (2) of the lines (10) and to check the tablets with respect to damages and to remove damaged tablets (21) being in the spaced apart position,
a storage and delivery station (20) being designed and arranged to accumulate and move down undamaged tablets, and
a transfer unit (24) to deposit the again spaced apart undamaged tablets in standing condition and to rotate back and place the tablets (2) into a pocket (3) each of the bottom foil (4).

7. The apparatus of claim 6, **characterized in that** the erecting station (9) includes a plurality of lamellas (13, 14), the lamellas being designed and arranged to form gaps (38) between two adjacent lamellas, the gaps having a size corresponding to the thickness of the tablets (2), the gaps being designed to be closed at a bottom side, and **in that** the erecting station (9) includes a plurality of passages (16) having dimensions corresponding to the thickness and the diameter of the tablets (2).

8. The apparatus of claim 6, **characterized in that** the transfer unit (24) includes two plates (25, 26) being placed on each other and substantially extending in a horizontal direction, the two plates being designed and arranged to be commonly movable and to be movable with respect to one another, the top plate (25) including a plurality of impressions (27), the impressions being designed and arranged to receive tablets in standing position in a way corresponding to the modular arrangement of the pockets (3) in the bottom foil (4), the bottom plate (26) having channels (28), the channels being designed and arranged inclined or arc-shaped to turn back the tablets (2) in the flat position.

9. The apparatus of at least one of the claims 6 to 8, **characterized in that** the storing and delivery station (20) being designed and arranged to accumulate the lines (10) of tablets (2) in surplus and to deliver the tablets in spaced apart condition into the impressions (27) of the transfer unit (24) corresponding to the plurality of pockets (3) in the modular arrangement.

10. The apparatus of at least one of the claims 6 to 9, **characterized in that** the erecting station (9) and/or the transfer unit (24) includes a unit (30) for sucking off dust and small pieces of tablets from the lamellas (13, 14) or the impressions (27) and the channels (28) respectively.

## Revendications

1. Procédé pour placer des comprimés (2) dans les alvéoles (3) d'une feuille de fond (4) emboutie profonde comprenant les étapes de procédé suivantes :
alignement des comprimés à partir de la position sensiblement plate dans une position redressée et tournée,
formation de cordons de comprimés (10), séparation des comprimés (2) redressés des cordons de comprimés (10),
vérification des comprimés séparés dans la position tournée au niveau des dommages,
enlèvement de comprimés (2) endommagés à partir de la position séparée,
accumulation et abaissement de comprimés (2) non endommagés,
séparation des comprimés abaissés (2) et
rotation des comprimés (2) séparés et dépose des comprimés séparés dans un alvéole respectif (3) de la feuille de fond (4).

2. Procédé selon la revendication 1, **caractérisé en ce que** les comprimés (2) sont redressés à partir de la position aplatie d'environ 90° dans leur position tournée, de sorte qu'ils sont debout sur leur bord.

3. Procédé selon la revendication 1, **caractérisé en ce que** les comprimés (2) sont alignés à partir de la position aplatie d'environ 45° à 60° dans leur position tournée.

4. Procédé selon l'une quelconque des revendications 1 à 3, **caractérisé en ce que** les comprimés (2) abaissés sont déplacés après la séparation par groupe dans une position au-dessus de la feuille de fond (4) et la rotation et la dépose des comprimés séparés s'effectuent dans cette position.

5. Procédé selon au moins l'une quelconque des revendications 1 à 3, **caractérisé en ce que** les comprimés (2) contrôlés et non endommagés des cordons de comprimés (10) sont accumulés avec un excédent et sont déposés séparés dans une position tournée dans des cavités (27) d'une unité de transfert (24) en forme de plaque, et **en ce que** la rotation arrière des comprimés dans la position aplatie s'effectue pendant leur passage par l'unité de transfert (24).

6. Dispositif pour placer des comprimés (2) dans les alvéoles (3) d'une feuille de fond (4) emboutie profonde,
comprenant une station de redressement (9), avec laquelle les comprimés (2) sont redressés à partir de la position aplatie dans une position tournée et sont ordonnés en cordons de comprimés (10),
une station de contrôle (17) pour la séparation des comprimés (2) des cordons de comprimés (10) et pour le contrôle des comprimés au niveau des dommages et enlèvement de comprimés (21) endommagés à partir de la position séparée,
une station d'accumulation et de remise (20) pour l'accumulation et l'abaissement des comprimés non endommagés, et
une unité de transfert (24) pour le dépôt de comprimés non endommagés et séparés à leur tour et pour la rotation arrière et la dépose des comprimés (2) dans un alvéole respectif (3) de la feuille de fond (4).

7. Dispositif selon la revendication 6, **caractérisé en ce que** la station de redressement (9) présente une pluralité de lamelles (13, 14) s'étendant sensiblement verticalement, entre lesquelles sont formés des interstices (38) correspondant à l'épaisseur des comprimés (2), **en ce que** les interstices (38) sont conçus fermés côté fond et **en ce que** la station de redressement (9) présente des passages (16) correspondant à l'épaisseur et au diamètre des comprimés (2).

8. Dispositif selon la revendication 6, **caractérisé en ce que** l'unité de transfert (24) présente deux plaques (25, 26) disposées l'une sur l'autre et s'étendant sensiblement horizontalement, qui sont disposées de façon à pouvoir bouger ensemble de façon commandée et coulisser les unes par rapport aux autres, la plaque (25) supérieure présentant des cavités (27) pour la pose des comprimés (2) dans la dimension modulaire des alvéoles (3) de la feuille de fond (4) et la plaque (26) inférieure pour la rotation arrière des comprimés (2) dans la position aplatie qui présente des canaux (28) agencés de façon inclinée ou en forme d'arc.

9. Dispositif selon au moins l'une quelconque des revendications 6 à 8, **caractérisé en ce que** la station d'accumulation et de remise (20) est prévue pour l'accumulation des cordons de comprimés (10) avec un nombre excessif de comprimés (2) et pour la remise séparée du nombre, correspondant à la dimension modulaire, de comprimés (2) dans les cavités (27) de l'unité de transfert (24).

10. Dispositif selon au moins l'une quelconque des revendications 6 à 9, **caractérisé en ce que** la station de redressement (9) et/ou l'unité de transfert (24) présentent un dispositif (30) pour l'aspiration de poussière et de parties des comprimés entre les lamelles (13, 14) ou hors des cavités (27) et des canaux (28).
